# EUROPÄISCHE PATENTSCHRIFT

(11) **EP 0 995 488 B1**
(45) Veröffentlichungstag und Bekanntmachung des Hinweises auf die Patenterteilung: **26.02.2003**
(21) Anmeldenummer: 99116680.2
(22) Anmeldetag: 26.08.1999
(51) Int. Cl.: B01J 3/02, B01J 8/00, C01B 3/06, C01B 33/107, B65G 53/46, F16K 1/30

(54) **Vorrichtung und Verfahren zum Befüllen und Entleeren eines mit brennbarem sowie aggressivem Gas beaufschlaften Behälters**
Apparatus and method to fill and empty a vessel with flammable and aggressive gas
Dispositif et procédé pour remplir et vider une enceinte avec un gaz inflammable et agressif

(30) Priorität: 16.10.1998 DE 19847786
(43) Veröffentlichungstag der Anmeldung: 26.04.2000
(73) Patentinhaber: Degussa AG, 40474 Düsseldorf (DE)
(72) Erfinder: Rauleder, Hartwig, Dr., 79618 Rheinfelden (DE); Zehe, Lothar, 79618 Rheinfelden (DE); Kuzma, Mieczyslaw, 79618 Rheinfelden (DE)

(56) Entgegenhaltungen:
- FR-A- 1 175 454
- US-A- 4 424 198
- US-A- 4 955 989

## Beschreibung

Die vorliegende Erfindung betrifft eine Vorrichtung zum sicheren Befüllen oder Entleeren eines unter Druck stehenden und mit brennbarem undloder aggressivem Gas beaufschlagten Behälters.

Die vorliegende Erfindung betrifft auch einen mit brennbarem und/oder aggressivem Gas beaufschlagten und unter Druck stehenden Reaktor, der mit einer solchen Befüll- und einer entsprechenden Entaschungsschleusenvorrichtung ausgestattet ist.

Ferner betrifft die vorliegende Erfindung ein spezielles Verfahren zum Befüllen und Entleeren eines solchen Reaktors.

Die vorliegende Erfindung betrifft auch die Verwendung eines solchen Reaktors zur gleichzeitigen Herstellung von Tetrachlorsilan, Trichlorsilan und Wasserstoff durch Umsetzung von Silicium mit Chlorwasserstoff.

Es ist bekannt, daß man durch Umsetzung von Silicium und Chlorwasserstoff bei der exotherm verlaufenden Reaktion Tetrachlorsilan sowie Trichlorsilan unter gleichzeitiger Bildung von Wasserstoff und einem Anfall an Reststoff in Form von Asche herstellen kann. Die Umsetzung erfolgt in der Regel bei einem Druck bis 3 bar abs. und einer Temperatur von 400 bis 1200 °C.

Es ist aufgrund gesetzlicher Vorgaben erforderlich zu gewährleisten, daß bei solchen Synthesen keine aggressiven, brennbaren oder gar toxischen Stoffe aus der Anlage entweichen.

Für Systeme mit heißem, brennbarem bzw. aggressivem Inhalt in die oder aus denen Feststoffe vorwiegend kontinuierlich gefüllt oder entnommen werden, gibt es keine dauerhaft dichtbleibende und zuverlässige Absperreinrichtung.

Durch Beläge an Dichtflächen, mechanische oder thermische Beanspruchung von Weichdichtungen, kann die Dichtigkeit einer Absperrung immer wieder beeinträchtigt werden.

Der vorliegenden Erfindung lag die Aufgabe zugrunde, obengenannte Anlagen möglichst sicher betreiben zu können.

Die gestellte Aufgabe wird erfindungsgemäß entsprechend den Angaben der Patentansprüche gelöst.

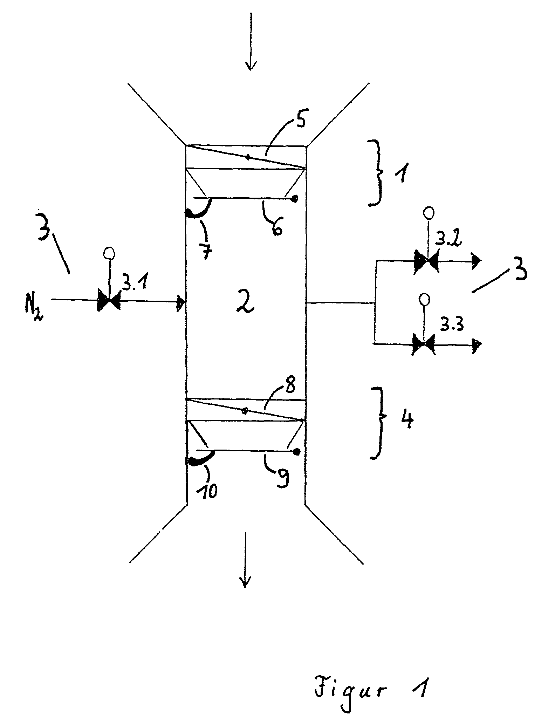

Es wurde nun gefunden, daß man unter Einsatz einer Vorrichtung zum Befüllen oder Entleeren eines unter Druck stehenden und mit brennbarem und/oder aggressivem Gas beaufschlagten Behälters, welche durch eine obere Klappenkombination (1), einen Schleusenbehälter (2) mit Spülvorrichtung (3) und eine untere Klappenkombination (4) gekennzeichnet ist, vgl. Figur 1, eine überdurchschnittlich zuverlässige Betriebsweise von Reaktoren, die bei Normaldruck und unter Druck betrieben werden und mit brennbarem und/oder aggressivem Gas beaufschlagt sind, insbesondere für solche zur gleichzeitiger Herstellung von Tetrachlorsilan, Trichlorsilan und Wasserstoff, sicherstellen kann.

Figur 1 gibt eine bevorzugte Ausführungsform der erfindungsgemäßen Vorrichtung zum Befüllen oder Entleeren eines unter Druck stehenden und mit brennbarem und/oder agressivem Gas beaufschlagten Behälters wieder.

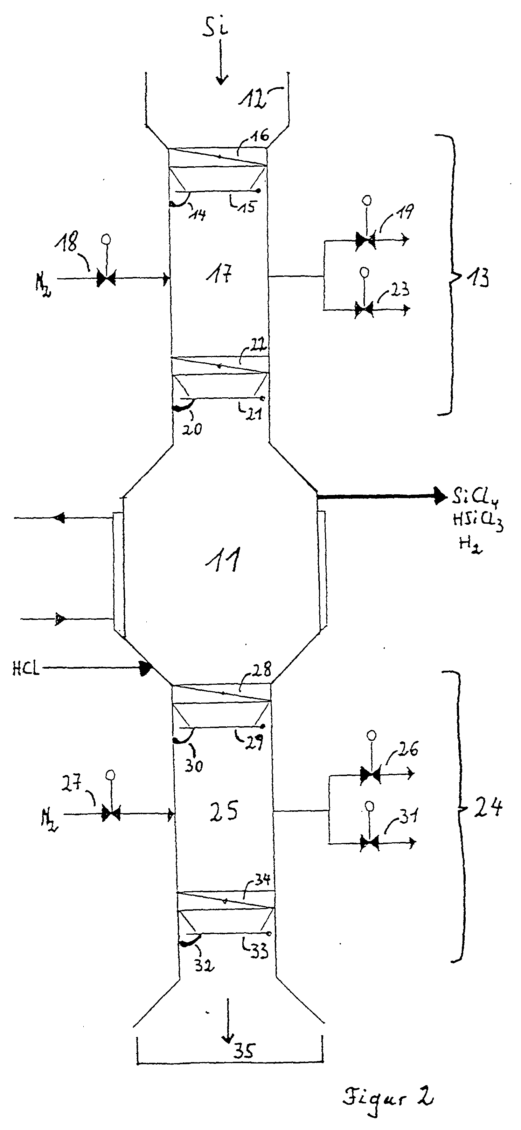

Ferner gibt Figur 2 eine bevorzugte Ausführungsform eines mit erfindungsgemäßen Schleusenvorrichtungen ausgestatteten Reaktors wieder.

Gegenstand der vorliegenden Erfindung ist daher eine Vorrichtung zum Befüllen oder Entleeren eines unter Druck stehenden und mit brennbarem und/oder aggressivem Gas beaufschlagten Behälters, die durch eine obere Klappenkombination (1), einen Schleusenbehälter (2) mit Spülvorrichtung (3) und eine untere Klappenkombination (4) gekennzeichnet ist, vgl. Figur 1.

Bevorzugt besteht eine Klappenkombination (1 bzw. 4) jeweils aus einer Erstklappe (5 bzw. 8), einer Zweitklappe (6 bzw. 9) und einer Verriegelung (7 bzw. 10) der Zweitklappe (6 bzw. 9).

Die Klappen sind (5, 8) mit metallischen Dichtungen gedichtet.

Die erfindungsgemäße Vorrichtung verfügt über eine Spülvorrichtung, die bevorzugt mit einem Inertgas, wie Argon, besonders vorzugsweise Stickstoff, betrieben "wird, wobei die Spülvorrichtung (3), insbesondere eine verschließbare Zuführung für ein Spülmedium (3.1), einen verschließbaren Auslaß für gebrauchtes, Sauerstoff-haltiges Spülmedium (3.2) und einen verschließbaren Auslaß für gebrauchtes, mit brennbarem und/oder aggressivem Gas beladenen Spülmedium (3.3) einschließlich jeweiliger Druck- und Volumenstrommeßeinrichtungen beinhaltet.

Erfindungsgemäß verwendet man eine solche Vorrichtung gemäß Anspruch 1 in vorteilhafter Weise als Schleusensystem zum sicheren Befüllen oder Entleeren eines unter Druck betriebenen und mit brennbarem und/oder aggressivem Gas beaufschlagten Reaktors.

Gegenstand der vorliegenden Erfindung ist somit auch ein Reaktor mit einer Befüll- und einer Entaschungsschleusenvorrichtung, wobei diese jeweils einer Vorrichtung gemäß Anspruch 1 genügen. Beispielsweise kann man in einem erfindungsgemäßen Festbettreaktor, der geeigneterweise bei einem leichten Überdruck bis 4 bar abs., vorzugsweise bei 1,1 bis 3 bar abs. betrieben wird, einen Feststoff, beispielsweise stückiges oder pulverförmiges Silicium, mit einem brennbaren und/oder aggressivem Gas, beispielsweise Chlorwasserstoff, unter Bildung einer vorwiegend unter Reaktionsbedingungen flüchtigen Produktmischung, die gegebenenfalls eine weitere gasförmige und brennbare bzw. aggressive Verbindung enthält, umsetzen und gleichzeitig eine besonders sichere Betriebsweise gewährleisten.

Bevorzugt verwendet man einen erfindungsgemäßen Reaktor, vgl. insbesondere Figur 2, zur gleichzeitigen Herstellung von Tetrachlorsilan, Trichlorsilan und Wasserstoff. In der Regel fällt hierbei nach Reaktor ein flüchtiges Produktgemisch an, das vorwiegend Tetrachlorsilan, als Nebenbestandteile Trichlorsilan und Wasserstoff sowie gegebenfalls Spuren an Dichlorsilan und HCI enthält, und welches unter Abtrennung von hochwertigem Wasserstoff kondensiert wird. Das Kondensat wird im allgemeinen destillativ aufgearbeitet.

Gegenstand der vorliegenden Erfindung ist ferner ein Verfahren zum Befüllen und Entleeren eines mit brennbarem und/oder aggresivem Gas beaufschlagten und unter Druck stehenden Reaktors über erfindungsgemäße Schleusenvorrichtungen, wobei man
- zur Beschickung des Reaktors (11), vgl. Figur 2, den Vorbehälter (12) der Befüllschleusenvorrichtung (13) mit festem Edukt füllt, die Verriegelung (14) der Zweitklappe (15) der oberen Klappenkombination der Befüllschleusenvorrichtung (13) löst, die Zweitklappe (15) und nachfolgend die Erstklappe (16) öffnet, Zweitklappe (15) einschließlich Verriegelung (14) und Erstklappe (16) schließt, den mit festem Edukt beaufschlagten Schleusenbehälter (17) durch Öffen der Spülmediumzufuhr (18) und Öffen des Auslasses für gebrauchtes, Sauerstoff-haltiges Spülmedium (19) mit einem Sauerstoff-freien Spülmedium, vorzugsweise mit Stickstoff spült, Auslaß (19) dann Zuführung (18) schließt, die Dichtigkeit der betätigten Armaturen durch Kontrolle des Drucks im Schleusenbehälter (17) prüft, die Verriegelung (20) der Zweitklappe (21) der unteren Klappenkombination der Befüllschleusenvorrichtung (13) löst, die Zweitklappe (21) und nachfolgend die Erstklappe (22) zur Reaktorbeschickung öffnet, Zweitklappe (21) und Erstklappe (22) schließt und verriegelt (20), anschließend den Schleusenbehälter (17) über den Auslaß für brennbares und/oder aggressives Gas (23) entspannt und die Dichtigkeit der betätigten Armaturen durch Kontrolle des Drucks im Schleusenbehälter (17) prüft, insbesondere durch Prüfen ob jeweils Druckänderungen festzustellen sind,
- und für die Entleerung des Reaktors, vgl. beispielsweise Ascheabzug (35) in Figur 2, über die Entaschungsschleusenvorrichtung (24)
den Schleusenbehälter (25) über den Auslaß für Sauerstoff-halbges Spülmedium (26) entspannt und über (27) spült, vorzugsweise mit Stickstoff, nachfolgend Spülmediumzufuhr (27) und Auslaß (26) schließt, die Klappen (28) und (29) einschließlich Verriegelung (30) der oberen Klappenkombination der Entaschungsschleusenvorrichtung (24) betätigt, nachfolgend schließt und den mit Asche sowie Produktgasen beaufschlagten Schleusenbehälter (25) durch Öffen der Spülmediumzufuhr (27) und des Auslasses (31) mit Spülmedium spült, Auslaß (31) und Zuführung (27) schließt und die Dichtigkeit der betätigten Armaturen durch Kontrolle des Drucks im Schleusenbehälter (25) prüft, die Verriegelung (32) der Zweitklappe (33) der unteren Klappenkombination der Entaschungsschleusenvorrichtung (24) löst, die Zweitklappe (33) und nachfolgend die Erstklappe (34) zur Entleerung des Schleusenbehälters (25) öffnet, Zweitklappe (33) und Erstklappe (34) der unteren Klappenkombination der Entaschungsschleusenvorrichtung schließt, verriegelt (32) und wiederum auf Dichtigkeit prüft, insbesondere durch Prüfen ob jeweils Druckänderungen im Schleusenbehälter (25) festzustellen sind.

Beim erfindungsgemäßen Verfahren spült man die Schleusenvorrichtung bevorzugt jeweils nach Betätigung einer Armatur und prüft nachfolgend auf Dichtigkeit. Bei unzulässigen Druckänderungen wird die Befüllung und Entaschung in der Regel gestoppt, dann müssen im allgemeinen, um weiterhin die Dichtigkeit und den sicheren Betrieb der Anlage gewährleisten zu können, die hier betätigten, undichten Armaturen sowie Dichtungen ausgetauscht werden.

Vorzugsweise setzt man beim erfindungsgemäßen Verfahren Silicium und Chlorwasserstoff zu Chlorsilanen und Wasserstoff um, wobei man insbesondere Wasserstoff mit einer Reinheit von 98 bis 100 % und gleichbleibender Qualität gewinnt.

Das erfindungsgemäße Verfahren wird in vorteilhafter Weise bevorzugt kontinuierlich betrieben.

## Patentansprüche

1. Vorrichtung zum Befüllen oder Entleeren eines unter Druck stehenden und mit brennbarem und/oder aggressivem Gas beaufschlagten Behälters, die bei der Herstellung von Chlorsilanen und Wasserstoff aus Silicium und Chlorwasserstoff verwendet wird,
**gekennzeichnet durch** eine obere Klappenkombination (1), einen Schleusenbehälter (2) mit Spülvorrichtung (3) und eine untere Klappenkombination (4), wobei eine Klappenkombination (1 bzw. 4) jeweils aus einer Erstklappe (5 bzw. 8), einer Zweitklappe (6 bzw. 9) und einer Verriegelung (7 bzw. 10) der Zweitklappe (6 bzw. 9) besteht und die Klappen (5, 8) mit metallischen Dichtungen gedichtet sind.

2. Vorrichtung nach Anspruch 1, wobei die Spülvorrichtung (3) eine verschließbare Zuführung für ein Spülmedium (3.1), einen verschließbaren Auslaß für gebrauchtes, Sauerstoff-haltiges Spülmedium (3.2) und einen verschließbaren Auslaß für gebrauchtes, mit brennbarem und/oder aggressivem Gas beladenen Spülmedium (3.3) einschließlich jeweiliger Druck- und Volumenstrommeßeinrichtungen beinhaltet.

3. Festbettreaktor mit Reaktor (11) und einer Befüll- (13) und einer Entaschungsschleusenvorrichtung (27) zur Herstellung von Chlorsilanen und Wasserstoff aus Silicium und Chlorwasserstoff, wobei die Befüllschleusenvorrichtung (13) und die Entaschungsschleusenvorrichtung (27) jeweils einer Vorrichtung gemäß Anspruch 1 genügen und durch eine obere Klappenkombination (1), einen Schleusenbehälter (2) mit Spülvorrichtung (3) und eine untere Klappenkombination (4), wobei eine Klappenkombination (1 bzw. 4) jeweils aus einer Erstklappe (5 bzw. 8), einer Zweitklappe (6 bzw. 9) und einer Verriegelung (7 bzw. 10) der Zweitklappe (6 bzw. 9) besteht und die Klappen (5, 8) mit metallischen Dichtungen gedichtet sind, gekennzeichnet sind.

4. Verfahren zum Befüllen und Entleeren eines mit brennbarem und/oder aggresivem Gas beaufschlagten und unter Druck stehenden Reaktors über Schleusenvorrichtungen nach den Ansprüchen 1 bis 3 bei der Herstellung von Chlorsilanen und Wasserstoff aus Silicium und Chlorwasserstoff,
**dadurch gekennzeichnet,**
**daß** man
- zur Beschickung des Reaktors (11)
den Vorbehälter (12) der Befüllschleusenvorrichtung (13) mit festem Edukt füllt, die Verriegelung (14) der Zweitklappe (15) der oberen Klappenkombination der Befüllschleusenvorrichtung (13) löst, die Zweitklappe (15) und nachfolgend die Erstklappe (16) öffnet, Zweitklappe (15) einschließlich Verriegelung (14) und Erstklappe (16) schließt, den mit festem Edukt beaufschlagten Schleusenbehälter (17) durch Öffen der Spülmediumzufuhr (18) und Öffen des Auslasses für gebrauchtes, Sauerstoff-haltiges Spülmedium (19) mit einem Sauerstoff-freien Spülmedium spült, Auslaß (19) dann Zuführung (18) schließt, die Dichtigkeit der betätigten Armaturen durch Kontrolle des Drucks im Schleusenbehälter (17) prüft, die Verriegelung (20) der Zweitklappe (21) der unteren Klappenkombination der Befüllschleusenvorrichtung (13) löst, die Zweitklappe (21) und nachfolgend die Erstklappe (22) zur Reaktorbeschickung öffnet, Zweitklappe (21) und Erstklappe (22) schließt und verriegelt (20), anschließend den Schleusenbehälter (17) über den Auslaß für brennbares und/oder aggressives Gas (23) entspannt und die Dichtigkeit der betätigten Armaturen durch Kontrolle des Drucks im Schleusenbehälter (17) prüft,
- und für die Entleerung des Reaktors über die Entaschungsschleusenvorrichtung (24)
den Schleusenbehälter (25) über den Auslaß für Sauerstoff-haltiges Spülmedium (26) entspannt und über (27) spült, nachfolgend Spülmediumzufuhr (27) und Auslaß (26) schließt, die Klappen (28) und (29) einschließlich Verriegelung (30) der oberen Klappenkombination der Entaschungsschleusenvorrichtung (24) betätigt, nachfolgend schließt und den mit Asche sowie Produktgasen beaufschlagten Schleusenbehälter (25) durch Öffen der Spülmediumzufuhr (27) und des Auslasses (31) mit Spülmedium spült, Auslaß (31) und Zuführung (27) schließt und die Dichtigkeit der betätigten Armaturen durch Kontrolle des Drucks im Schleusenbehälter (25) prüft, die Verriegelung (32) der Zweitklappe (33) der unteren Klappenkombination der Entaschungsschleusenvorrichtung (24) löst, die Zweitklappe (33) und nachfolgend die Erstklappe (34) zur Entleerung des Schleusenbehälters (25) öffnet, Zweitklappe (33) und Erstklappe (34) der unteren Klappenkombination der Entaschungsschleusenvorrichtung schließt, verriegelt (32) und auf Dichtigkeit prüft.

5. Verfahren nach Anspruch 4,
**dadurch gekennzeichnet,**
**daß** man eine Schleusenvorrichtung jeweils nach Betätigung einer Armatur spült und die betätigten Armaturen jedesmal auf Dichtigkeit prüft.

6. Verfahren nach Anspruch 4 oder 5,
**dadurch gekennzeichnet,**
**daß** man in dem Reaktor Silicium und Chlorwasserstoff zu Chlorsilanen und Wasserstoff umsetzt.

7. Verfahren nach einem der Ansprüche 4 bis 6,
**dadurch gekennzeichnet,**
**daß** man Wasserstoff mit einer Reinheit von 98 bis 100 % und gleichbleibender Qualität gewinnt.

8. Verfahren nach einem der Ansprüche 4 bis 7,
**dadurch gekennzeichnet,**
**daß** man das Verfahren kontinuierlich betreibt.

9. Verwendung von Silicium und Chlorwasserstoff zur gleichzeitigen Herstellung von Tetrachlorsilan, Trichlorsilan und Wasserstoff in einem Festbettreaktor nach Anspruch 3.

## Claims

1. An apparatus for filling or emptying a pressurized vessel charged with flammable and/or aggressive gas which is used in the production of chlorosilanes and hydrogen from silicon and hydrogen chloride, **characterized by** an upper flap combination (1), a lock vessel (2) having a flushing apparatus (3) and a lower flap combination (4), where a flap combination (1 or 4) in each case consists of a first flap (5 or 8), a second flap (6 or 9) and a latch (7 or 10) of the second flap (6 or 9), and the flaps (5, 8) are sealed by metallic seals.

2. An apparatus according to claim 1, where the flushing apparatus (3) comprises a closeable infeed for a flushing medium (3.1), a closeable outlet for used oxygen-containing flushing medium (3.2) and a closeable outlet for used flammable- and/or aggressive-gas-laden flushing medium (3.3) including respective pressure and volumetric flow measuring devices.

3. A fixed-bed reactor having a reactor(11) and a filling lock apparatus (13) and a deashing lock apparatus (27) for producing chlorosilanes and hydrogen from silicon and hydrogen chloride, the filling lock apparatus (13) and the deashing lock apparatus (27) in each case complying with an apparatus according to claim 1 and being **characterized by** an upper flap combination (1), a lock vessel (2) having a flushing apparatus (3) and a lower flap combination (4), where a flap combination (1 or 4) in each case consists of a first flap (5 or 8), a second flap (6 or 9) and a latch (7 or 10) of the second flap (6 or 9), and the flaps (5, 8) are sealed by metallic seals.

4. A process for filling and emptying a pressurized reactor which is charged with flammable and/or aggressive gas via lock apparatuses according to any of claims 1 to 3 in the production of chlorosilanes and hydrogen from silicon and hydrogen chloride, **characterized in that** it comprises
- to load the reactor (11), filling the preliminary vessel (12) of the filling lock apparatus (13) with solid starting material, detaching the latch (14) of the second flap (15) of the upper flap combination of the filling lock apparatus (13), opening the second flap (15) and then the first flap (16), closing second flap (15) including latch (14) and first flap (16), flushing, with an oxygen-free flushing medium, the lock vessel (17) charged with solid starting material by opening the flushing medium feed (18) and opening the outlet for used oxygen-containing flushing medium (19), closing outlet (19) then infeed (18), testing the tightness of the actuated valves by monitoring the pressure in the lock vessel (17), detaching the latch (20) of the second flap (21) of the lower flap combination of the filling lock apparatus (13), opening the second flap (21) and then the first flap (22) for reactor loading, closing second flap (21) and first flap (22) and latching them (20), subsequently depressurizing the lock vessel (17) via the outlet for flammable and/or aggressive gas (23) and testing the tightness of the actuated valves by monitoring the pressure in the lock vessel (17),
- and for emptying the reactor via the deashing lock apparatus (24), depressurizing the lock vessel (25) via the outlet for oxygen-containing flushing medium (26) and flushing it via (27), then closing flushing medium feed (27) and outlet (26), actuating the flaps (28) and (29) including latch (30) of the upper flap combination of the deashing lock apparatus (24), then closing them and flushing, with flushing medium, the ash-charged and product-gas-charged lock vessel (25) by opening the flushing medium feed (27) and the outlet (31), closing outlet (31) and infeed (27) and testing the tightness of the actuated valves by monitoring the pressure in the lock vessel (25), detaching the latch (32) of the second flap (33) of the lower flap combination of the deashing lock apparatus (24), opening the second flap (33) and then the first flap (34) for emptying the lock vessel (25), closing second flap (33) and first flap (34) of the lower flap combination of the deashing lock apparatus, latching them (32) and testing for tightness.

5. A process according to claim 4, **characterized in that** a lock apparatus is flushed in each case after actuating a valve and the actuated valves are tested for tightness every time.

6. A process according to claim 4 or 5, **characterized in that** silicon and hydrogen chloride are reacted in the reactor to form chlorosilanes and hydrogen.

7. A process according to any one of claims 4 to 6, **characterized in that** hydrogen having a purity of from 98 to 100% and constant quality is produced.

8. A process according to any one of claims 4 to 7, **characterized in that** the process is operated continuously.

9. The use of silicon and hydrogen chloride for the simultaneous preparation of tetrachlorosilane, trichlorosilane and hydrogen in a fixed-bed reactor according to claim 3.

## Revendications

1. Dispositif pour remplir et vider une enceinte remplie d'un gaz combustible et/ou agressif sous pression, utilisé pour fabriquer des chlorosilanes et de l'hydrogène à partir de silicium et de gaz chlorhydrique,
**caractérisé en ce qu'**
il comporte une combinaison supérieurs de clapets (1), une enceinte à écluse (2) équipée d'un dispositif de rinçage (3), et une combinaison inférieure de clapets (4), chaque combinaison (1 ou 4) étant composée d'un premier clapet (5 ou 8), d'un second clapet (6 ou 9) et d'un verrouillage (7 ou 10) des seconds clapets (6 ou 9), les clapets (5, 8) ayant leur étanchéité assurée par des joints métalliques.

2. Dispositif selon la revendication 1,
**caractérisé en ce que**
le dispositif de rinçage (3) comprend une amenée, qui peut être fermée, d'un agent de rinçage (3.1), une sortie, qui peut être fermée, de l'agent de rinçage usagé (3.2) contenant de l'oxygène ainsi qu'une sortie, qui peut être fermée, de l'agent de rinçage chargé de gaz combustible et/ou agressif (3.3), ainsi que des dispositifs de mesure de pression et de volume correspondants.

3. Réacteur à lit fixe comprenant un réacteur (11) et, pour fabriquer des chlorosilanes et de l'hydrogène à partir de silicium et de gaz chlorhydrique, un dispositif de remplissage (13) et un dispositif de décendrage (27) correspondant chacun à un dispositif selon la revendication 1,
**caractérisé par**
une combinaison supérieure de clapets (1), une enceinte à écluse (2) équipée d'un dispositif de rinçage (3), une combinaison inférieure de clapets (4), chaque combinaison (1 ou 4) étant composée d'un premier clapet (5 ou 8), d'un second clapet (6 ou 9) et d'un verrouillage (7 ou 10) des seconds clapets (6 ou 9), les clapets (5, 8) ayant leur étanchéité assurée par des joints métalliques.

4. Procédé pour remplir et vider un réacteur rempli d'un gaz combustible et/ou agressif sous pression par l'intermédiaire de dispositifs à écluse selon les revendications 1 à 3, pour fabriquer des chlorosilanes et de l'hydrogéne à partir de silicium et de gaz chlorhydrique,
**caractérisé en ce que**
- pour charger le réacteur (11), on remplit le réservoir amont (12) du dispositif de remplissage à écluse (13) par du produit solide, on dégage le verrouillage (14) du second clapet (15) de la combinaison supérieure de clapets de ce dispositif (13), on ouvre ce second clapet (15) puis le premier clapet (16), on ferme le second clapet (15) y compris son verrouillage (14) et le premier clapet (16), on rince le réservoir à écluse (17) alimenté en produit solide en introduisant un agent de rinçage dépourvu d'oxygène, par ouverture de l'amenés (18) d'agent de rinçage et en évacuant cet agent qui s'est chargé en oxygène, par ouverture de la sortie (19), puis on ferme cette sortie (19) et l'amenée (18), on vérifie l'étanchéité des robinets manoeuvrés en contrôlent la pression régnant dans le réservoir à écluse (17), on dégage le verrouillage (20) du second clapet (21) de la combinaison inférieure de clapets du dispositif de remplissage à écluse (13), on ouvre le second clapet (21) puis le premier clapet (22) afin de charger le réacteur, on ferme le second clapet (21) et le premier clapet (22) et on engage le verrouillage (20), ensuite on détend le réservoir à écluse (17) par la sortie destinée au gaz combustible ou agressif (23) et on vérifie l'étanchéité des robinets manoeuvrés en contrôlant la pression dans le réservoir à écluse (17),
- et pour vidanger le réacteur à travers le dispositif de décendrage à écluse (24), on détend le réservoir à écluse (25) à travers la sortie destinée à l'agent de rinçage (26) chargé en oxygène et on rince ce réservoir par l'amenée (27), ensuite on ferme l'amenés d'agent de rinçage (27) et la sortie (26), on manoeuvre les clapets (28) et (29) ainsi que le verrouillage (30) de la combinaison supérieure de clapets du dispositif de décendrage à écluse (24), on les ferme ensuite et on rince avec le liquide de rinçage le récipient à écluse (25) contenant des cendres et des gaz de produit en ouvrant l'amenés d'agent de rinçage (27) ainsi que la sortie (31), on ferme cette sortie (31) puis l'amenée (27) et on vérifie l'étanchéité des robinets manoeuvres en contrôlant la pression dans le réservoir à écluse (25), on dégage le verrouillage (32) du second clapet (33) de la combinaison inférieure de clapets du dispositif de décendrage à écluse (24), on ouvre ce second clapet (33) puis le premier clapet (34) pour vider le récipient à écluse (25), puis on ferme le second clapet (33) et le premier clapet (34) de la combinaison inférieure du dispositif de décendrage à écluse, on engage le verrouillage (32) et on vérifia l'étanchéité.

5. Procédé selon la revendication 4,
**caractérisé en ce qu'**
on rince un dispositif à écluse chaque fois qu'on a manoeuvrè un robinet et les robinets manoeuvres ont leur étanchéité vérifiés chaque fois.

6. Procédé selon la revendication 4 ou 5,
**caractérisé en ce qu'**
on transforme dans le réacteur du silicium et du gaz chlorhydrique en chlorosilanes et en hydrogène.

7. Procédé selon l'une des revendications 4 à 6,
**caractérisé en ce qu'**
on obtient de l'hydrogène d'une pureté de 98 à 100 % et de qualité régulière.

8. Procédé selon l'une des revendications 4 à 7,
**caractérisé en ce que**
le procédé fonctionne en continu.

9. Utilisation de silicium et de gaz chlorhydrique pour fabriquer en même temps du tétrachlorosilane, du trichlorosilane et de l'hydrogène dans un réacteur à lit fixe selon la revendication 3.
